# EUROPÄISCHE PATENTANMELDUNG

(11) **EP 1 431 003 A1**
(43) Veröffentlichungstag der Anmeldung: **23.06.2004**
(21) Anmeldenummer: 03029401.1
(22) Anmeldetag: 19.12.2003
(51) Int. Cl.: B25B 33/00, B23B 31/16, B23B 31/167, B23Q 11/00, B25B 15/00

(54) **Kraftspannfutter und Ausklinkschlüssel dafür**

(30) Priorität: 21.12.2002 DE 10260493
(71) Anmelder: Schunk GmbH & Co. KG Fabrik für Spann- und Greifwerkzeuge, 74348 Lauffen (DE)
(72) Erfinder: Übele, Andrè, 71546 Kleinaspach (DE)
(74) Vertreter: Paul, Dieter-Alfred, Dipl.-Ing.

(57) **Zusammenfassung**

Die Erfindung betrifft ein Kraftspannfutter für Werkzeugmaschinen mit einem Futterkörper (1) und mehreren Spannbacken (4), die durch einen Antrieb mit Keilstangen (5) radial zur Futterachse gemeinsam verstellbar sind. Es ist ein Stellmechanismus vorgesehen, der einen im Futterkörper (1) drehbar gelagerten Ausklinkbolzen (P) und einen mit dem Ausklinkbolzen (P) kuppelbaren Ausklinkschlüssel (21) aufweist, um zwischen der Arbeitsstellung und einer Backenwechselstellung zu bewegen. Der Ausklinkschlüssel weist einen Schaft (22) auf. Dieser ist von einer Hülse (26) umgeben, die zwischen einer Ausgangslage, in der sie das Kupplungselement (23) im wesentlichen umgibt, so daß sie eine kuppelnde Verbindung zwischen dem Ausklinkschlüssel (21) und dem Ausklinkbolzen (P) verhindert, und einer Freigabestellung, in der sie das Kupplungselement (23) freigibt, so daß eine Verbindung zwischen dem Ausklinkschlüssel (21) und dem Ausklinkbolzen (P) möglich ist, axial gegenüber dem Schaft (22) verstellbar ist, wobei eine Druckfeder (27) vorgesehen ist, welche die Hülse (26) in die Ausgangslage drückt.

## Beschreibung

### Kraftspannfutter und Ausklinkschlüssel dafür

Die vorliegende Erfindung betrifft ein Kraftspannfutter für Werkzeugmaschinen, insbesondere für Drehmaschinen, mit einem Futterkörper und mehreren Spannbacken, die in radialen Backenführungen des Futterkörpers bewegbar angeordnet und durch einen Antrieb radial zur Futterachse gemeinsam verstellbar sind, wobei zu dem Antrieb Keilstangen gehören, die zur Verstellung der Spannbacken im Futterköper quer zur Futterachse verschiebbar geführt sind und jeweils eine Verzahnung aufweisen, die in ihrer Arbeitsstellung mit einer entsprechenden Gegenverzahnung an einer zugehörigen Spannbacke in Eingriff steht, wobei ein Stellmechanismus vorgesehen ist, der einen im Futterkörper drehbar gelagerten Ausklinkbolzen und einen mit dem Ausklinkbolzen kuppelbaren Ausklinkschlüssel aufweist, um durch eine Drehung des Ausklinkbolzens die Keilstange oder einen die Verzahnung aufweisenden Kupplungsaufsatz der Keilstange parallel zur Futterachse zwischen der Arbeitsstellung und einer Backenwechselstellung, in der die Verzahnung und die Gegenverzahnung außer Eingriff stehen, zu bewegen, so daß die Spannbacken radial aus dem Futterkörper entnehmbar sind, wobei der Ausklinkschlüssel einen Schaft aufweist, an dessen einem axialen Ende ein Kupplungselement zur Verbindung mit dem Ausklinkbolzen und an dessen anderem Ende ein Griff vorgesehen sind. Des weiteren betrifft die Erfindung einen Ausklinkschlüssel für ein solches Kraftspannfutter.

Spannfutter für Werkzeugmaschinen dieser Art sind bekannt und werden in der Praxis in erster Linie an Drehmaschinen eingesetzt, um die zu bearbeitenden Werkstücke zu spannen. Die herkömmlichen Spannfutter bestehen aber aus einem formsteifen Futterkörper, der eine zentrale Aufnahmeöffnung für die Werkstücke aufweist, sowie aus mehreren Spannbacken, die in Backenführungen des Futterkörpers radial bewegbar sind. Neben manuell betätigbaren Handspannfuttern werden in komplexeren Werkzeugmaschinen, insbesondere in programmgesteuerten Drehautomaten, häufig sogenannte Kraftspannfutter eingesetzt, bei denen die von den Spannbacken auf das Werkstück ausgeübten Spannkräfte motorisch oder hydraulisch erzeugt werden.

Aus der DE-A-43 35 896 ist beispielsweise ein Kraftspannfutter bekannt, das nach dem Prinzip sich gradlinig bewegender Keilstangen arbeitet, die in quer zu den Führungsnuten für die Spannbacken vorgesehenen Keilstangentaschen bewegbar geführt sind. Die Keilstangen, welche durch einen im Futterkörper angeordneten Zylinder angetrieben werden, sind mit den Spannbacken über Schrägverzahnungen derart gekoppelt, daß die tangentialen Bewegungen der Keilstangen in den Keilstangentaschen in radiale Spannbewegungen der Spannbacken umgesetzt werden.

Bei dem bekannten Spannfutter kann jede Keilstange durch ein exzentrisches Stellorgan (Exzenterbolzen), welches in die Keilstange eingreift und mittels eines Ausklinkschlüssels von außen verdrehbar ist, axial verstellt werden, so daß ihre Verzahnung außer Eingriff von der Gegenverzahnung der zugehörigen Spannbacke kommt und die Spannbacke radial aus der Führungsnut im Futterkörper herausgezogen werden kann.

Bei einem anderen Kraftspannfutter, welches aus der DE 40 16 775 C1 bekannt ist, sind die Keilstangen axial verschiebbar in einer radial zur Futterachse verschiebbaren Treibbacke gehalten. Bei diesem Spannfutter ist die Treibbacke über eine Keilhakenkopplung mittels eines axial beweglichen Futterkolbens radial verstellbar, um die Treibbacke gemeinsam mit der Keilstange zu bewegen, und kann die Keilstange parallel zur Futterachse gegenüber der Treibbacke bewegt werden, um sie außer Eingriff von der Spannbacke zu bringen, so daß die Spannbacke aus der Führungsnut im Futterkörper herausgezogen werden kann.

Bei den bekannten Kraftspannfuttern erfolgt die Betätigung der exzentrischen Stellorgane über einen Ausklinkschlüssel, der vor der Inbetriebnahme wieder von dem Futterkörper abgezogen werden muß. wird dies jedoch vergessen, kann dies zu folgeschweren Unfällen führen.

Aufgabe der Erfindung ist es daher, ein Kraftspannfutter der Eingangs genannten Art sowie einen Ausklinkschlüssel zu dessen Betätigung anzugeben, welche die Unfallgefahr reduzieren.

Diese Aufgabe ist erfindungsgemäß dadurch gelöst, daß der Schaft des Ausklinkschlüssels von einer Hülse umgeben ist, die zwischen einer Ausgangslage, in der sie das Kupplungselement im wesentlichen umgibt, so daß sie eine kuppelnde Verbindung zwischen dem Ausklinkschlüssel und dem Ausklinkbolzen verhindert, und einer Freigabestellung, in der sie das Kupplungselement freigibt, so daß eine Verbindung zwischen dem Ausklinkschlüssel und dem Ausklinkbolzen möglich ist, axial gegenüber dem Schaft verstellbar ist, wobei eine Druckfeder vorgesehen ist, welche die Hülse in die Ausgangslage drückt.

Der Erfindung liegt damit die Überlegung zugrunde, den Ausklinkschlüssel in der Weise auszubilden, daß er sich automatisch von dem Futterkörper löst, wenn er von der Bedienungsperson losgelassen wird. Hierzu ist an dem Schaft eine Hülse vorgesehen, welche in ihrer Ausgangslage das Kupplungselement umgibt. Wenn nun das Kupplungselement in die entsprechende Schlüsselfläche des Ausklinkbolzen eingeschoben wird, kommt die Hülse stirnseitig mit dem Ausklinkbolzen in Kontakt. Hierdurch wird eine weitere Axialbewegung der Hülse unterbunden mit der Folge, daß der Schaft mit dem Kupplungselement entgegen der Rückstellkraft der Druckfeder relativ zu der Hülse weiter in den Ausklinkbolzen bewegt wird und dieser gedreht werden kann. Wenn die Bedienungsperson jetzt den Ausklinkschlüssels losläßt, wird die Hülse durch die Rückstellkraft der Druckfeder wieder in ihre Ausgangslage gebracht, d.h. der Schaft wird durch die Rückstellkraft der Druckfeder wieder aus dem Ausklinkbolzen herausgezogen, so daß die Verbindung zwischen dem Ausklinkschlüssel und dem Ausklinkbolzen automatisch gelöst wird. Auf diese Weise kann die Unfallgefahr beträchtlich herabgesetzt werden.

Gemäß einer bevorzugten Ausführungsform ist vorgesehen, daß eine Arretierungseinrichtung vorgesehen ist, welche eine Verbindung zwischen dem Ausklinkschlüssel und dem Ausklinkbolzen verriegelt und ein Lösen des Ausklinkschlüssels von dem Ausklinkbolzen nur zuläßt, wenn sich der Ausklinkbolzen in einer der Arbeitsstellung der Keilstange entsprechenden Drehlage befindet. Dabei kann vorgesehen sein, daß die Ausklinkvorrichtung eine in einer Querbohrung des Ausklinkbolzens angeordnete Verriegelungselement insbesondere in Form einer Kugel aufweist, die in der der Arbeitsstellung der Keilstange entsprechenden Drehlage des Ausklinkbolzens in eine Ausnehmung des Futterkörpers radial nach außen ausweichen kann und in davon abweichenden Drehlagen des Ausklinkbolzens an einem solchen Ausweichen nach außen gehindert und radial nach innen in den Innenbereich der Schlüsselfläche des Ausklinkbolzens gedrückt wird, um mit einer Ausnehmung des Ausklinkschlüssels in Eingriff zu kommen und diesen so zu verriegeln. Eine solche Verriegelung des Ausklinkschlüssels am Futterkörper ist grundsätzlich bereits bekannt.

Um eine stabile Anordnung zu erhalten, besteht die Hülse in bevorzugter Weise aus einem Metall wie beispielsweise Messing. Andere Materialien können jedoch in gleicher Weise eingesetzt sein.

Gemäß einer Ausbildung der Erfindung ist vorgesehen, daß die Druckfeder in einem Gehäuse vorgesehen ist, welches den Schaft umgibt. In diesem Fall ragt die Hülse vorzugsweise ebenfalls in das Gehäuse hinein, wobei dann Anschlagflächen an dem Gehäuse und der Hülse den axialen Verstellweg der Hülse begrenzen und auf diese Weise die Ausgangslage definieren können.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: eine Ausführungsform eines erfindungsgemäßen Kraftspannfutters in perspektivischer Darstellung,
- Figur 2: das Spannfutter aus Figur 1 in Draufsicht
- Figur 3: das Spannfutter im Schnitt entlang der Linie F-F in Figur 2,
- Figur 4: das Spannfutter im Teilschnitt entlang der Linie D-D in Figur 2,
- Figur 5: das Spannfutter aus Figur 2 in der Seitenansicht mit Teilschnitt entlang der Linie A-A in Figur 2,
- Figur 6: einen Ausklinkschlüssel gemäß der vorliegenden Erfindung in perspektivischer Ansicht, wobei sich die Hülse in ihrer Ausgangslage befindet,
- Figur 7: den Ausklinkschlüssel aus Figur 6 in Vorderansicht,
- Figur 8: den Ausklinkschlüssel im Längsschnitt entlang der Linie B-B in Figur 7,
- Figur 9: den vorderansichtigen Ausklinkschlüssel aus Figur 6, wobei die Hülse in ihre obere Endstellung verschoben ist, und
- Figur 10: den Ausklinkschlüssel im Längsschnitt entlang der Linie B-B in Figur 9.

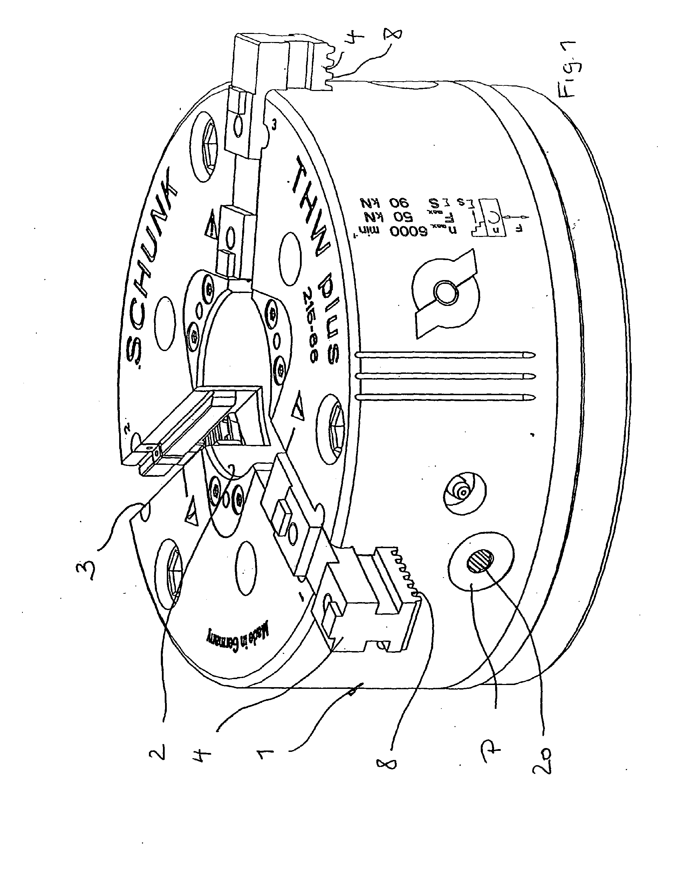

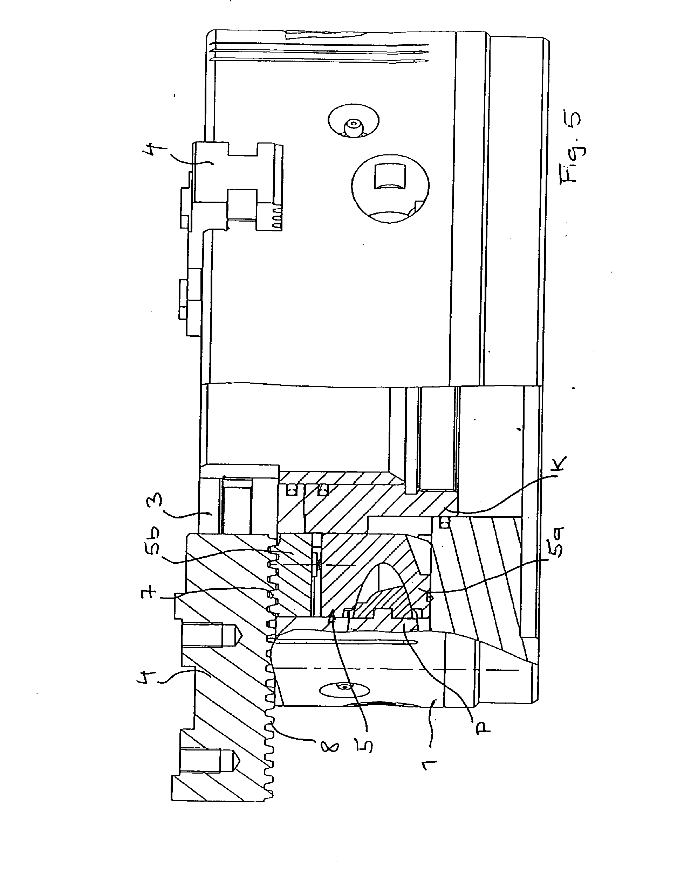

In den Figuren 1 bis 5 ist eine Ausführungsform eines Spannfutters gemäß der vorliegenden Erfindung dargestellt, das beispielsweise zum Spannen von werkstücken an Drehmaschinen eingesetzt werden kann. Zu dem Spannfutter gehört ein Futterkörper 1 zylindrischer Grundform, der an seiner rückseitigen Stirnfläche an der nicht dargestellten Spindel einer Werkzeugmaschine befestigt werden kann. Der Futterkörper weist einen zentralen Durchlaß 2 auf, in den ein zu spannendes Werkstück eingesetzt werden kann.

Das dargestellte Spannfutter ist in herkömmlicher. Weise als Dreibackenfutter ausgebildet. Entsprechend sind an der vorderen Stirnseite des Futterkörpers 1 drei radiale Backenführungen 3 vorgesehen, die gleichmäßig über den Umfang verteilt, d.h. mit jeweils 120° versetzt gegeneinander angeordnet sind. In die Backenführungen 3 sind Spannbacken 4 eingesetzt, die jeweils aus einer Grundbakke und einer daran anschraubbaren Aufsatzbacke bestehen können. In der Zeichnung ist jeweils nur die Grundbacke der Spannbacken 4 dargestellt. Die drei Spannbacken 4 können durch einen Keilstangenmechanismus zum Spannen und Lösen von Werkstücken gemeinsam nach innen und außen verstellt werden.

zu diesem Keilstangenmechanismus gehören drei Keilstangen 5, die jeweils einer der Spannbacken 4 zugeordnet und im Futterkörper 1 quer zu den Backenführungen 3 verstellbar gehalten sind. Konkret weisen die Keilstangen 5 jeweils einen länglichen Keilstangenkörper 5a auf, der in dem Futterkörper 1 verstellbar angeordnet ist und an seinem einem, radial weiter innenliegenden Ende mit schräg zur Futterachse A verlaufenden Keilflächen 6 versehen ist, die mit entsprechenden Keilflächen eines nur angedeuteten Futterkolbens K zusammenwirken, um eine Axialbewegung des Futterkolbens K im Futterkörper 1 in eine radiale Bewegung der Keilstangenkörper 5a umzusetzen. Die Keilstangen 5 haben weiterhin jeweils einen Kupplungsaufsatz 5b, der an seiner Vorderseite eine Verzahnung 7 trägt, die in eine entsprechende Gegenverzahnung 8 an der zugehörigen Spannbacke 4 eingreift. In den Figuren sind die Keilstange 5 und die Spannbacke 4 in ihrer Kupplungsstellung dargestellt. Die Entkupplungsstellung ist nicht gezeigt.

Bei der dargestellten Ausführungsform sind die Kupplungsaufsätze 5b im wesentlichen plattenförmig ausgebildet und in eine entsprechende Ausnehmung 9 an der Oberseite des jeweiligen Keilstangenkörpers 5 eingesetzt. Der Kupplungsaufsatz 5b steht in formschlüssiger Verbindung mit dem Keilstangenkörper 5a, so daß ein Kippen des Kupplungsaufsatzes 5b verhindert wird.

In Futterachsrichtung A sind die Kupplungsaufsätze 5b gegenüber den Keilstangenkörpern 5a zwischen einer oberen Arbeitsstellung und einer unteren Backenwechselstellung beweglich. Hierzu weist jeder Kupplungsaufsatz 5b an seiner Unterseite einen bolzenförmigen Führungsfortsatz 11 auf, der in eine entsprechende Führungsbohrung 17 des Keilstangenkörpers 5a eingreift. Wie in der Zeichnung gut erkennbar ist, wird bei der dargestellten Ausführungsform der Kupplungsaufsatz 5b an dem Keilstangenkörper 5a durch zwei Druckfedern 15 abgestützt, welche in dem Keilstangenkörper 5a angeordnet sind und den Kupplungsaufsatz 5b über entsprechende Druckstücke 16 gegen die Spannbacke 4 in die Arbeitsstellung zu drücken.

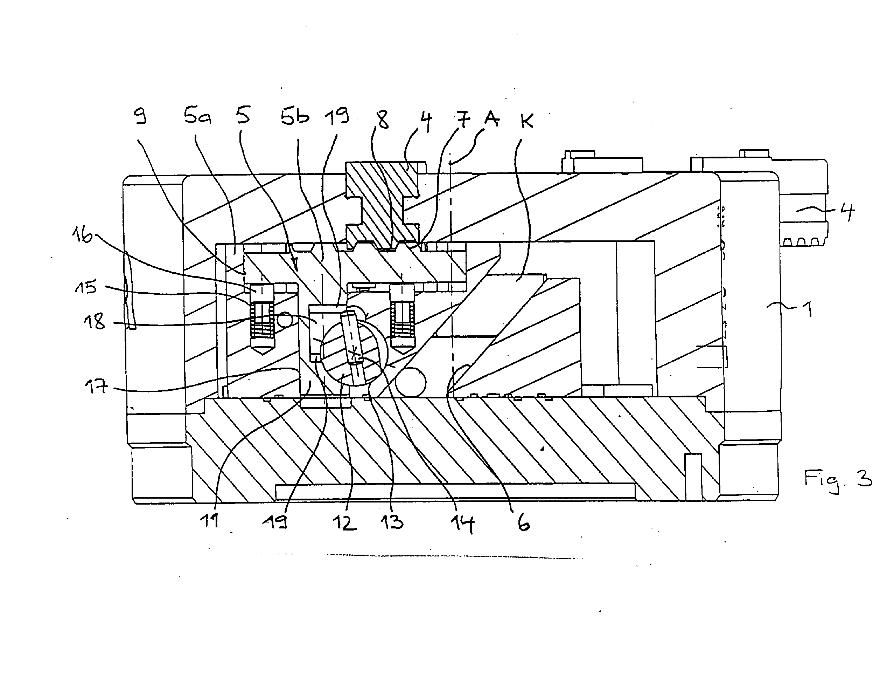

Um den Kupplungsaufsatz 5b aus der in Figur 3 dargestellten Arbeits- oder Kupplungsstellung, in welcher seine Verzahnung 7 mit der Gegenverzahnung 8 der Spannbacke 4 in Eingriff steht, in die Backenwechselstellung verschieben zu können, ist ein Stellorgan in der Form eines Exzenterbolzens 12 vorgesehen, der in einer Querbohrung 13 des Keilstangenkörpers 5a drehbar gelagert ist und als Exzenter einen von dem Bolzen 12 radial abstehenden Fortsatz in Form eines Stifts 14 trägt. Dieser Stift 14 greift in eine Ausnehmung 18 des Führungsbolzens 11 des Keilstangenaufsatzes 5b ein und kommt nach einer Drehung des Exzenterbolzens 12 aus der in Figur 3 gezeigten Lage um etwa 80° im entgegengesetzten Uhrzeigersinn in Eingriff mit einer Gegenfläche 19 des Führungsbolzens 11, so daß der Keilstangenaufsatz 5b bei einer weiteren Drehung nach unten gedrückt wird, bis die Verzahnung 7 der Keilstange 5 vollständig aus der Gegenverzahnung 8 der Spannbacke 4 zurückgezogen ist und die Spannbacke 4 in radialer Richtung aus der Backenführung 3 im Futterkörper 1 herausgezogen werden kann (Backenwechselstellung).

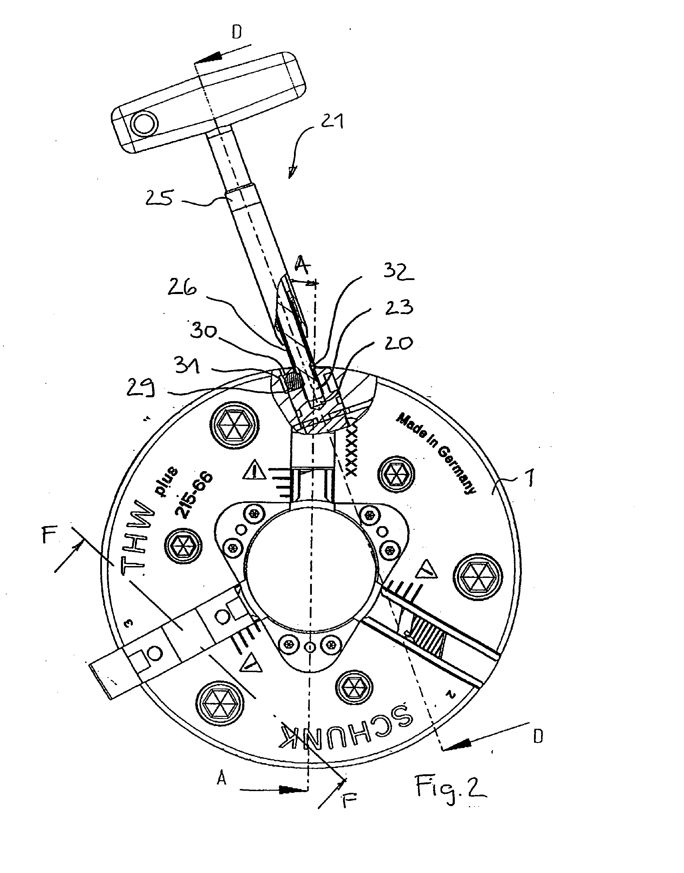

Um den Exzenterbolzen 12 drehen zu können, ist er mit einem Ausklinkbolzen P verbunden, der an seiner außenseitigen Stirnfläche mit einer Schlüsselfläche 20 versehen ist, in die ein Ausklinkschlüssel 21 eingesetzt werden kann (siehe Figur 2).

Wie bereits zuvor erläutert wurde, wird der Kupplungsaufsatz 5b durch die beiden Druckfedern 15 gegenüber dem Keilstangenkörper 5a abgestützt und nach oben gegen die Spannbacke 4 gedrückt. Dies hat einerseits zur Folge, daß die Federkraft der Druckfedern 15 überwunden werden muß, um den Kupplungsaufsatz 5b durch eine Drehung des Exzenterbolzens 12 vom Eingriff mit der Spannbacke 4 zu lösen, andererseits der Kupplungsaufsatz 5b jedoch durch die Rückstellkraft der Druckfedern 15 auch wieder automatisch unter Drehung des Exzenterbolzens 12 angehoben wird, wenn eine Bedienungsperson den Ausklinkschlüssel 21 losläßt. Die Anordnung ist dabei so getroffen, daß die Druckfedern 15 den Exzenterbolzen 12 nicht vollständig in die Ausgangslage, sondern nur so weit zurückdrehen, daß zwar eine Überdeckung, aber kein vollständiger Eingriff der Verzahnungen 7, 8 stattfindet. Hierdurch wird sichergestellt, daß die Spannbacke 4 nur dann aus der Backenführung 3 herausgezogen werden kann, so lange die Bedienungsperson den Ausklinkschlüssel 21 festhält, also der Backenwechsel auf jeden Fall gewünscht ist.

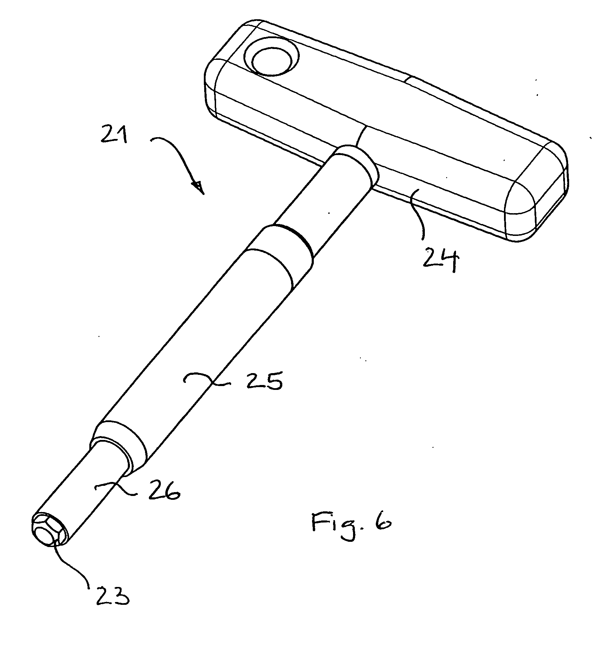

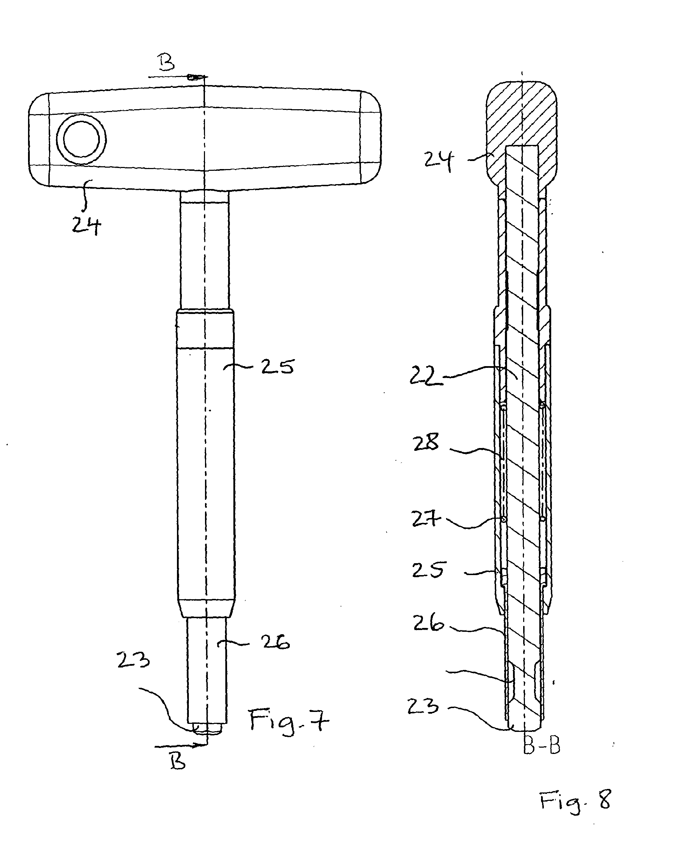

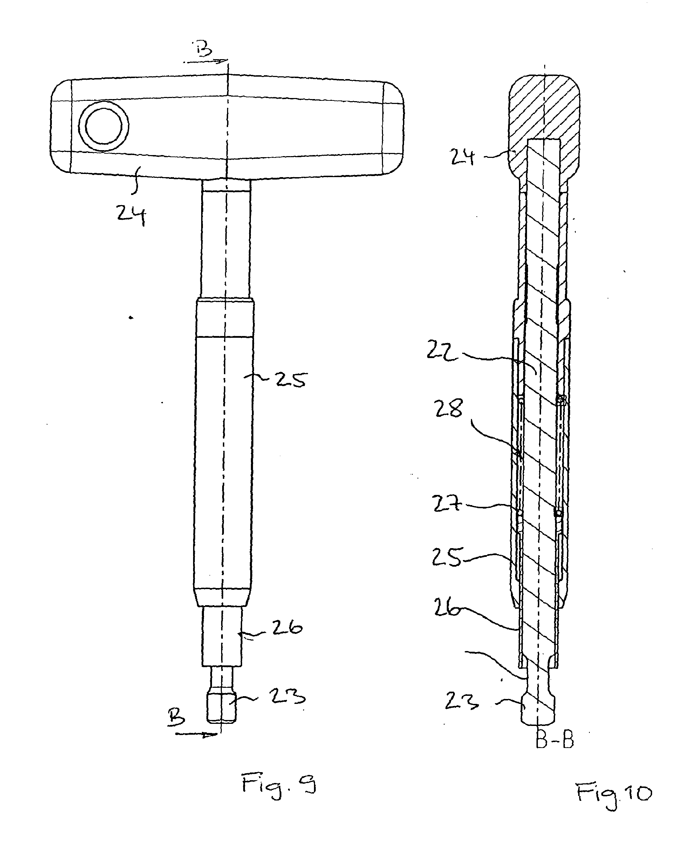

In den Figuren 6 bis 10 ist ein Ausklinkschlüssel 21 gemäß der vorliegenden Erfindung dargestellt. Dieser Ausklinkschlüssel umfaßt einen Schaft 22, der an seinem vorderen axialen Ende ein Kupplungselement 23 in Form eines Außensechskantkopfes für den Eingriff in die Schlüsselflächen des Ausklinkbolzen P aufweist und an seinem hinteren axialen Ende mit einem Griffelement 24 versehen ist. wie insbesondere die Figuren 8 und 10 gut erkennen lassen, besitzt der Ausklinkschlüssel 21 weiterhin ein Kunststoffgehäuse 25, das sich von dem Griffelement 24 ausgehend in Richtung des vorderen Endes erstreckt und den Schaft 22 umgibt. Desweitern ist eine Hülse 26 aus Messing an dem vorderen Endbereich des Ausklinkschlüssels 21 vorgesehen, welche mit ihrem hinteren Ende in das Gehäuse 25 eingreift. Die Hülse 26 ist gegenüber dem Schaft 22 zwischen der in den Figuren 7 bis 9 dargestellten Ausgangslage, in welcher ihr vorderes Ende den Sechskantkopf 23 in der Weise umgibt, daß eine Verbindung zwischen dem Ausklinkschlüssel 21 und dem Ausklinkbolzen P verhindert wird, und einer in den Figuren 9 und 10 gezeigten Kupplungsstellung, in welcher die Hülse 26 gegenüber dem Schaft 22 soweit in das Gehäuse 25 verschoben ist, daß der Sechskantkopf 23 freigegeben wird und somit eine Verbindung zwischen dem Ausklinkschlüssel 21 und dem Ausklinkbolzen P hergestellt werden kann, axial verschiebbar, wobei sie durch eine Schraubendruckfeder 27, welche in dem zwischen dem Gehäuse 25 und dem Schaft 22 gebildeten Ringraum 28 angeordnet ist, in ihrer Ausgangslage gedrückt wird.

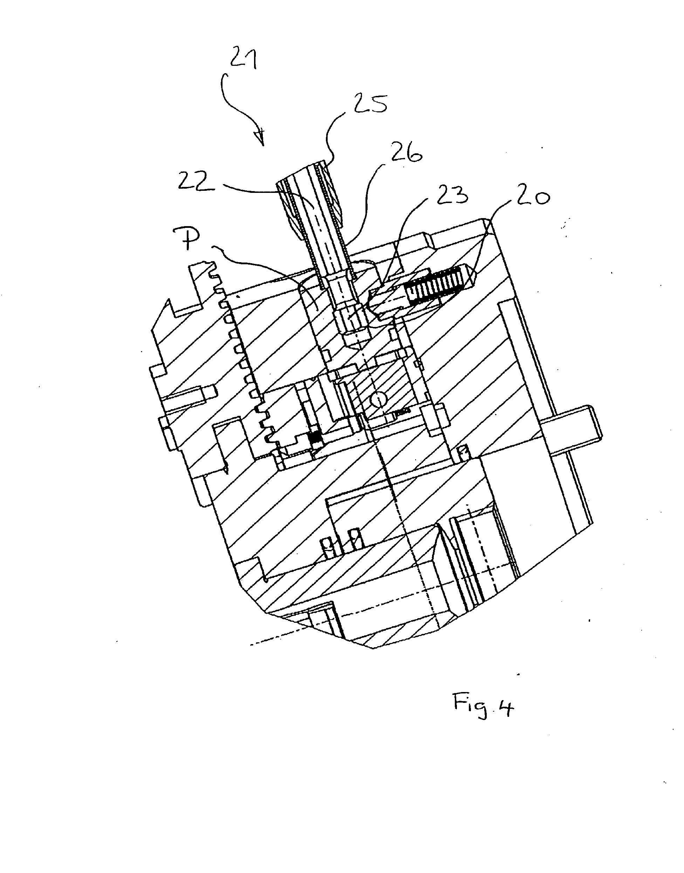

Wenn mit dem erfindungsgemäßen Ausklinkschlüssel 21 der Exzenterbolzen 12 verdreht werden soll, wird der Sechskantkopf 23 in die Schlüsselfläche 20 des mit dem Exzenterbolzen 12 verbundenen Ausklinkbolzens (P) eingesetzt eingesetzt, bis die Stirnfläche der Hülse 26 an der Außenfläche des Ausklinkbolzens (P) in Anlage kommt. Anschließend kann der Schaft 22 entgegen der Rückstellkraft der Druckfeder 27 relativ zu der Hülse 26 weiter in den Exzenterbolzen 12 in die in Figur 4 dargestellte Position hineingedrückt werden, so daß dieser gedreht werden kann.

Wenn die Bedienungsperson den Ausklinkschlüssel 21 jetzt bewußt oder unbewußt losläßt, wird der Schaft 22 durch die Rückstellkraft der Druckfeder 27 automatisch wieder relativ zu der Hülse 26 zurückgezogen mit der Folge, daß die Verbindung mit dem Ausklinkbolzen P gelöst wird und der Ausklinkschlüssel 21 von dem Futterkörper 1 abfällt. Auf diese Weise können Unfälle vermieden werden, die darauf zurückzuführen sind, daß die Werkzeugmaschine in Gang gesetzt wird, obwohl der Ausklinkschlüssel 21 noch mit dem Futterkörper 1 verbunden ist.

Ein solches automatisches Lösen des Ausklinkschlüssels 21 von dem Futterkörper 1 erfolgt bei der dargestellten Ausführungsform nur in dem Fall, daß der Ausklinkbolzen P sich in seiner Ausgangslage befindet, welche der Arbeitsstellung des Kupplungsaufsatzes 5b entspricht. Ansonsten wird ein Lösen des Ausklinkschlüssels 21 von dem Ausklinkbolzen P durch eine Arretierungseinrichtung verhindert. Diese Arretierungseinrichtung, wie sie an sich bekannt und in Figur 2 dargestellt ist, umfaßt eine Kugel 29, die in einer Querbohrung 30 des Ausklinkbolzens P angeordnet ist, wobei sie in ihrer Ausgangsstellung - wie in Figur 2 dargestellt - radial nach außen in eine Ausnehmung 31 des Futterkörpers 1 ausweichen kann, in anderen Drehlagen jedoch durch den Futterkörper 1 an einem solchen Ausweichen gehindert und radial nach innen in die Schlüsselfläche 20 hineingedrückt wird, wo sie mit einer Umfangsnut 32 des Ausklinkschlüssels 21 in Eingriff kommt, um diesen an dem Futterkörper 1 zu fixieren.

## Patentansprüche

1. Kraftspannfutter für Werkzeugmaschinen, insbesondere für Drehmaschinen, mit einem Futterkörper (1) und mehreren Spannbacken (4), die in radialen Backenführungen (3) des Futterkörpers (1) bewegbar angeordnet und durch einen Antrieb radial zur Futterachse (A) gemeinsam verstellbar sind, wobei zu dem Antrieb Keilstangen (5) gehören, die zur Verstellung der Spannbacken (4) im Futterköper (1) quer zur Futterachse (A) verschiebbar geführt sind und jeweils eine Verzahnung (7) aufweisen, die in ihrer Arbeitsstellung mit einer entsprechenden Gegenverzahnung (8) an einer zugehörigen Spannbacke (4) in Eingriff steht, wobei ein Stellmechanismus vorgesehen ist, der einen im Futterkörper (1) drehbar gelagerten Ausklinkbolzen (P) und einen mit dem Ausklinkbolzen (P) kuppelbaren Ausklinkschlüssel (21) aufweist, um durch eine Drehung des Ausklinkbolzens (P) die Keilstange (5) oder einen die Verzahnung (7) aufweisenden Kupplungsaufsatz (5b) der Keilstange (5) parallel zur Futterachse (A) zwischen der Arbeitsstellung und einer Backenwechselstellung, in der die Verzahnung (7) und die Gegenverzahnung (8) außer Eingriff stehen, so daß die Spannbacken (4) radial aus dem Futterkörper (1) entnehmbar sind, zu bewegen, wobei der Ausklinkschlüssel einen Schaft (22) aufweist, an dessen einem axialen Ende ein Kupplungselement (23) zur Verbindung mit dem Ausklinkbolzen (P) und an dessen anderem Ende ein Griff (24) vorgesehen sind, **dadurch gekennzeichnet, daß** der Schaft (22) des Ausklinkschlüssels (21) von einer Hülse (26) umgeben ist, die zwischen einer Ausgangslage, in der sie das Kupplungselement (23) im wesentlichen umgibt, so daß sie eine kuppelnde Verbindung zwischen dem Ausklinkschlüssel (21) und dem Ausklinkbolzen (P) verhindert, und einer Freigabestellung, in der sie das Kupplungselement (23) freigibt, so daß eine Verbindung zwischen dem Ausklinkschlüssel (21) und dem Ausklinkbolzen (P) möglich ist, axial gegenüber dem Schaft (22) verstellbar ist, wobei eine Druckfeder (27) vorgesehen ist, welche die Hülse (26) in die Ausgangslage drückt.

2. Kraftspannfutter nach Anspruch 1, **dadurch gekennzeichnet, daß** die Hülse (26) aus Metall, insbesondere aus Messing besteht.

3. Kraftspannfutter nach Anspruch 1 oder 2, **dadurch gekennzeichnet, daß** die Druckfeder (27) in einem den Schaft (22) umgebenden Gehäuse (25) angeordnet ist.

4. Kraftspannfutter nach Anspruch 3, **dadurch gekennzeichnet, daß** die Hülse (26) in das Gehäuse (25), welches insbesondere aus Kunststoff besteht, hineinragt.

5. Kraftspannfutter nach einem der vorherigen Ansprüche, **dadurch gekennzeichnet, daß** eine Arretierungseinrichtung vorgesehen ist, welche eine Verbindung zwischen dem Ausklinkschlüssel (21) und dem Ausklinkbolzen (P) verriegelt und ein Lösen des Ausklinkschlüssels (21) von dem Ausklinkbolzen (P) nur zuläßt, wenn sich der Ausklinkbolzen (P) in einer der Arbeitsstellung der Keilstange (5) entsprechenden Drehlage befindet.

6. Kraftspannfutter nach Anspruch 5, **dadurch gekennzeichnet, daß** die Ausklinkvorrichtung eine in einer Querbohrung (30) des Ausklinkbolzens (P) angeordnetes Verriegelungselement insbesondere in Form einer Kugel (29) aufweist, die in der der Arbeitsstellung der Keilstange (5) entsprechenden Drehlage des Ausklinkbolzens (P) in eine Ausnehmung (31) des Futterkörpers (1) radial nach außen ausweichen kann und in davon abweichenden Drehlagen des Ausklinkbolzens (P) an einem solchen Ausweichen nach außen gehindert und radial nach innen in den Innenbereich der Schlüsselfläche des Ausklinkbolzens (P) gedrückt wird, um mit einer Umfangsnut (32) des Ausklinkschlüssels (21) in Eingriff zu kommen und diesen so zu verriegeln.

7. Ausklinkschlüssel zur Betätigung eines Ausklinkbolzens (P), der in dem Futterkörper (1) eines Kraftspannfutters drehbar gelagert und mit einer in dem den Futterkörper (1) gehaltenen und an ihrer Oberseite eine Verzahnung (Z) aufweisende Keilstange (5) gekoppelt ist, um die Keilstange (5) oder einen die Verzahnung (7) aufweisenden Kupplungsaufsatz (5b) der Keilstange (5) zwischen einer oberen Arbeitsstellung und einer unteren Backenwechselstellung zu bewegen, wobei der Ausklinkschlüssel einen Schaft (22) aufweist, an dessen einem axialen Ende ein Kupplungselement (23) zur Verbindung mit dem Ausklinkbolzen (P) und an dessen anderem Ende ein Griff (24) vorgesehen sind, **dadurch gekennzeichnet, daß** der Schaft (22) von einer Hülse (26) umgeben ist, die zwischen einer Ausgangslage, in der sie das Kupplungselememt (23) im wesentlichen umgibt, so daß sie eine kuppelnde Verbindung zwischen dem Ausklinkschlüssel (21) und dem Ausklinkbolzen (P) verhindert, und einer Freigabestellung, in der sie das Kupplungselement (23) freigibt, so daß eine Verbindung zwischen dem Ausklinkschlüssel (21) und dem Ausklinkbolzen (P) möglich ist, axial gegenüber dem Schaft (22) verstellbar ist, wobei eine Druckfeder (27) vorgesehen ist, welche die Hülse (26) in die Ausgangslage drückt.

8. Ausklinkschlüssel nach Anspruch 7, **dadurch gekennzeichnet, daß** die Hülse (26) aus Metall, insbesondere aus Messing besteht.

9. Ausklinkschlüssel nach Anspruch 7 oder 8, **dadurch gekennzeichnet, daß** die Druckfeder (27) in ein den Schaft (22) umgebendes Gehäuse (25) angeordnet ist.

10. Ausklinkschlüssel nach Anspruch 9, **dadurch gekennzeichnet, daß** die Hülse (26) in das Gehäuse (25), welches insbesondere aus Kunststoff besteht, hineinragt.
